# EUROPÄISCHE PATENTSCHRIFT

(11) **EP 3 130 814 B1**
(45) Veröffentlichungstag und Bekanntmachung des Hinweises auf die Patenterteilung: **12.06.2019**
(21) Anmeldenummer: 15180633.8
(22) Anmeldetag: 11.08.2015
(51) Int. Cl.: F16D 3/38, F16C 33/78, F16D 3/41

(54) **SCHUTZRING, DICHTUNGSANORDNUNG UND ZAPFENKREUZGARNITUR**
GUARD RING, SEALING ASSEMBLY AND STUD CROSS FITTING
BAGUE DE PROTECTION, SYSTEME D'ETANCHEITE ET BLOC CROISILLON

(43) Veröffentlichungstag der Anmeldung: 15.02.2017
(73) Patentinhaber: Spicer Gelenkwellenbau GmbH, 45143 Essen (DE)
(72) Erfinder: STEIN, Thomas, 45128 Essen (DE)
(74) Vertreter: Neumann Müller Oberwalleney & Partner Patentanwälte

(56) Entgegenhaltungen:
- EP-A1- 0 321 076
- EP-A2- 1 225 355
- DE-C1- 19 637 553
- DE-U1- 8 616 597
- US-A- 4 515 574

## Beschreibung

Die Erfindung betrifft eine Dichtungsanordnung nach dem Oberbegriff des Anspruchs 1.

Ein solcher Schutzring dient dazu, auf eine Lagerbüchse einer Zapfenkreuzgarnitur aufgesteckt zu werden, wobei der mindestens eine Vorsprung in eine Außenumfangsnut der Lagerbüchse eingreift und in dieser verrastet. Der Schutzring lässt sich mit dem Sitzabschnitt auf einen Zapfen eines Zapfenkreuzes der Zapfenkreuzgarnitur aufschieben und auf diesem festlegen.

Ein solcher Schutzring ist aus der DE 196 37 553 C1 bekannt. Die dort beschriebene Abdichtung für eine Lagerbüchse weist eine Hauptdichtung mit einem Träger und eine Vordichtung auf. Die Hauptdichtung sitzt kraftschlüssig in einer Innenwandung der Lagerbüchse. Die Hauptdichtung weist radial nach innen weisende Dichtlippen auf, die in Anlage zu einer Dichtfläche eines Lagerzapfens sind. Die Vordichtung sitzt drehfest auf dem Lagerzapfen des Zapfenkreuzes und weist einen Schenkel auf, der mit einer Dichtkante an einer äußeren Dichtfläche der Lagerbüchse in Anlage ist. Axial beabstandet zur Dichtkante ist ein Haltewulst vorgesehen, der radial nach innen vorsteht. Mit dem Haltewulst kann die Vordichtung zur Vormontage an den Träger der Hauptdichtung angehängt werden. Hierzu ist der im unmontierten Zustand einen Öffnungsquerschnitt aufweist, der kleiner ist als der Querschnitt eines Kragens des Trägers.

Ein anderer Schutzring ist aus der DE 197 54 699 A1 bekannt. Dort ist eine Abdichtung einer Lagerbüchse mit einer armierten Dichtung und einer Vordichtung beschrieben. Die armierte Dichtung sitzt kraftschlüssig in einer Innenwandung der Lagerbüchse. Die Armierung der Dichtung weist einen radial nach innen gerichteten Schenkel auf, an dem ein Radialwellendichtring befestigt ist. Der Radialwellendichtring dichtet zwischen der Lagerbüchse und der Oberfläche des Zapfens des Zapfenkreuzes ab. Darüber hinaus weist die Dichtung eine axial ausgerichtete Dichtlippe auf, die in Anlage zu der Vordichtung gehalten ist. Die Vordichtung sitzt drehfest auf dem Zapfen des Zapfenkreuzes und weist einen Schenkel auf, der einen Endbereich der Lagerbüchse umgreift. Die Vordichtung weist ebenfalls eine Armierung auf, die ein L-förmiges Querschnittsprofil aufweist. Der die Lagerbüchse umgreifende Schenkel weist nach radial innen gerichtete Rastnasen auf, mit denen die Vordichtung in eine Außenumfangsnut der Lagerbüchse einsitzt und verrastet ist. Der radial nach innen weisende Schenkel der Armierung ist gummiert und sitzt mit der Gummierung fest auf dem Zapfen des Zapfenkreuzes. Darüber hinaus ist eine Stirnseite der Lagerbüchse innen gegen die Gummierung der Vordichtung axial abgestützt.

Eine vergleichbare Dichtungsanordnung ist in der DE 197 01 461 A1 offenbart.

Die US 4 874 349 A offenbart eine Dichtungsanordnung mit einer Hauptdichtung, welche in eine Lagerbüchse eingesetzt ist und die Lagerbüchse gegen eine Außenumfangsfläche eines Zapfens eines Zapfenkreuzes abdichtet. Ferner offenbart diese Druckschrift einen Schutzring, der vor dem offenen Ende der Lagerbüchse angeordnet ist und die Lagerbüchse umgreift. Der Schutzring weist ein L-förmiges Querschnittsprofil auf, wobei ein zylindrischer Schenkelabschnitt des Schutzrings auf das offene Ende der Lagerbüchse aufgeschoben ist und mit Flanschabschnitten in einer Außenumfangsnut der Lagerbüchse verrastet ist. Ein radial nach innen weisender Schenkel des Schutzrings sitzt mit Presssitz auf einer Außenumfangsfläche des Zapfens.

Eine vergleichbare Dichtungsanordnung zeigt US 5 588 915 A, wobei der Schutzring mehrere über den Umfang verteilte nach innen gerichtete Vorsprünge aufweist, mit denen der Schutzring in einer Außenumfangsnut der Lagerbüchse eingreift, wobei die Außenumfangsnut durch eine Ausnehmung in der Lagerbüchse und einen Träger der Hauptdichtung gebildet ist.

Aufgabe der vorliegenden Erfindung ist es, eine Dichtungsanordnung bereitzustellen, die zum einen eine sichere Montage des Schutzrings auf einen Zapfen eines Zapfenkreuzes gewährleistet und die eine gute Abschmierbarkeit der Lagerung einer Lagerbüchse einer Zapfenkreuzgarnitur ermöglicht.

Die Aufgabe wird erfindungsgemäß durch eine Dichtungsanordnung gemäß Anspruch 1 gelöst. Bevorzugte Ausführungsbeispiele ergeben sich aus den abhängigen Ansprüchen.

Durch die über den Umfang verteilt angeordneten Stege ist gewährleistet, dass sich der Schutzring bei der Montage auf die Lagerbüchse und bei der Montage der Lagerbüchse mit vormontiertem Schutzring auf einen Zapfen eines Zapfenkreuzes axial über die Stege, d.h. innerhalb des Hülsenabschnitts, gegen die Lagerbüchse abstützt. Der Hülsenabschnitt selbst dient somit nicht, wie häufig bei Schutzringen nach dem Stand der Technik, als axiale Abstützung. Der Hülsenabschnitt kann daher dünn gestaltet werden. Somit kann die Lagerbüchse mit aufgestecktem Schutzring auf einen Zapfen eines Zapfenkreuzes aufgeschoben werden, bis der Schutzring mit seinem Sitzabschnitt sicher und drehfest auf dem Zapfen festgelegt ist. Bei diesem Aufschieben dienen die Stege als Abstützung. Eine sichere axiale Abstützung ist erforderlich, da der Sitzabschnitt eine zentrale Aufnahmebohrung aufweist, mit der der Sitzabschnitt mit Übermaß auf einer Außenumfangsfläche des Zapfens sitzt.

Die Stege sorgen zudem dafür, dass der Sitzabschnitt, der in Form eines Flansches radial nach innen vom Hülsenabschnitt vorsteht, in axialem Abstand zu einer Stirnfläche der Lagerbüchse angeordnet ist. Somit kann beim Abschmieren einer Lagerung innerhalb der Lagerbüchse Schmierfett zwischen der Stirnfläche der Lagerbüchse und dem Sitzabschnitt zwischen den Stegen hindurch radial nach außen gedrückt werden. Vorzugsweise ist der Hülsenabschnitt in radialem Abstand zur Außenumfangsfläche der Lagerbüchse angeordnet, so dass das Schmierfett nach außen austreten kann.

Der Schutzring kann als Schutz einer Hauptdichtung dienen, die zwischen dem Zapfen und der Lagerbüchse angeordnet sein kann.

Der Hülsenabschnitt weist an einem vorderen axialen Ende eine umlaufende axial vom Sitzabschnitt weg weisende Stirnfläche auf. Im Übergang zwischen der Stirnfläche und dem mindestens einen Vorsprung ist eine konkave Ausnehmung angeordnet. Die konkave Ausnehmung gewährleistet einen ausreichenden Spalt zwischen der Außenumfangsfläche der Lagerbüchse und der Innenumfangsfläche des Schutzrings. Hierdurch wird vermieden, dass bei einem Lackiervorgang nach Montage des Schutzrings auf die Lagerbüchse Kapillarkräfte entstehen, die den aufgebrachten Lack in den Radialspalt zwischen Hülsenabschnitt und Lagerbüchse hineinziehen. Dies würde dazu führen, dass bei ausgehärtetem Lack der Schutzring fest mit der Lagerbüchse verbunden ist. Der Stützring soll jedoch drehfest auf dem Zapfen sitzen und eine Relativbewegung zwischen dem Schutzring und der Lagerbüchse ermöglichen.

Vorzugsweise sind die Stege jeweils in einem Übergangsbereich zwischen dem Hülsenabschnitt und dem Sitzabschnitt angeordnet, so dass die Stege sowohl mit dem Hülsenabschnitt als auch mit dem Sitzabschnitt verbunden sind, vorzugsweise integral mit diesen ausgebildet sind. Hierdurch sind die Stege stabilisiert und können auch Querkräfte aufnehmen, die unbeabsichtigt bei der Montage entstehen können, wenn die Lagerbüchse gegenüber dem Schutzring verdreht wird.

Vorzugsweise sind mehrere Vorsprünge über den Umfang verteilt angeordnet. Diese dienen dazu, in eine Außenumfangsnut der Lagerbüchse einzugreifen. Es ist jedoch auch denkbar, dass ein einziger umlaufender Vorsprung vorgesehen ist.

In einer Innenumfangsfläche des Hülsenabschnitts können axial verlaufende Nuten angeordnet sein, durch die die Vorsprünge voneinander getrennt sind. Die Nuten gewährleisten das Austreten von Schmiermittel beim Abschmieren der Lagerbüchse.

Die über den Umfang verteilten Vorsprünge können unterschiedlich weit radial nach innen vorstehen. Somit können sämtliche Vorsprünge in die Außenumfangsnut der Lagerbüchse eingreifen und den Schutzring darin verrasten. Zum anderen können einige der Vorsprünge in einem geringeren Maß nach radial innen vorstehen, um das Montieren des Schutzrings auf die Lagerbüchse zu erleichtern. Beim Aufschieben des Schutzrings auf die Lagerbüchse wird nämlich der Hülsenabschnitt radial nach außen verformt, bis die Vorsprünge in die Außenumfangsnut der Lagerbüchse einschnappen.

Wenn einige der Vorsprünge eine geringere radiale Ausdehnung nach innen aufweisen, muss der Hülsenabschnitt nicht so sehr verformt werden wie bei einer Ausführungsform mit Vorsprüngen, die alle identisch weit nach radial innen vorstehen.

Ein bevorzugtes Ausführungsbeispiel wird im Folgenden anhand der Figuren näher erläutert. Hierin zeigt
- Figur 1: einen Halbschnitt einer Kreuzgelenkwelle,
- Figur 2: eine perspektivische Darstellung der Zapfenkreuzgarnitur gemäß Figur 1,
- Figur 3: einen ersten Längsschnitt durch einen der Zapfen gemäß Figur 2,
- Figur 4: eine vergrößerte Darstellung des Schutzrings gemäß dem Ausschnitt IV in Figur 3,
- Figur 5: einen weiteren Längsschnitt durch einen Zapfen gemäß Figur 2,
- Figur 6: eine vergrößerte Darstellung des Schutzrings gemäß Ausschnitt VI in Figur 5,
- Figur 7: eine perspektivische Darstellung des Schutzrings gemäß Figur 2,
- Figur 8: eine Draufsicht des Schutzrings gemäß Figur 7,
- Figur 9: die Darstellung des Querschnittsprofils entlang der Schnittlinie IX-IX in Figur 8,
- Figur 10: die Darstellung des Querschnittsprofils entlang der Schnittlinie X-X in Figur 8, und
- Figur 11: die Darstellung des Querschnittsprofils entlang der Schnittlinie XI-XI in Figur 8.

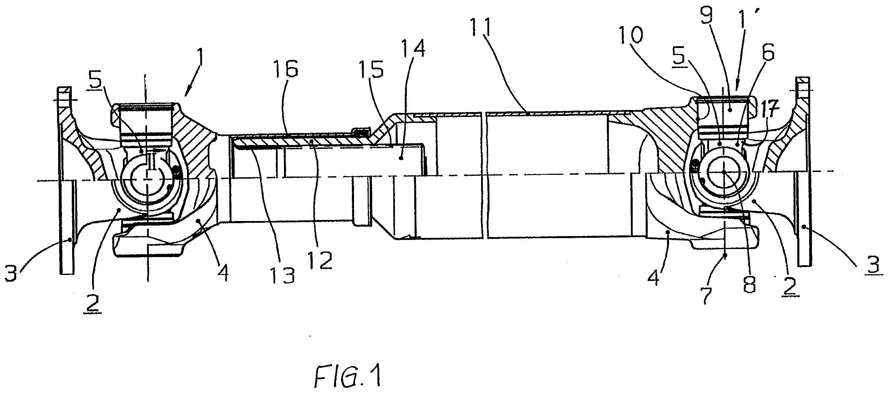

Die Figur 1 zeigt eine Kreuzgelenkwelle mit den beiden Kreuzgelenken 1, 1'. Jedes der beiden Kreuzgelenke 1, 1' weist eine erste Gelenkgabel 2 auf, die mit einem Flansch 3 versehen ist. Ferner ist eine zweite Gelenkgabel 4 je Kreuzgelenk 1,1' vorgesehen. Beide Gelenkgabeln 2, 4 sind durch eine Zapfenkreuzgarnitur 5 derart miteinander verbunden, dass die erste Gelenkgabel 2 Schwenkbewegungen um die Längsachse 8 durchführen kann und die Baueinheit aus der ersten Gelenkgabel 2 und der Zapfenkreuzgarnitur 5 um die zweite Längsachse 7 eine Schwenkbewegung im Verhältnis zur zweiten Gelenkgabel 4 durchführen kann. Die Zapfenkreuzgarnitur 5 umfasst ein Zapfenkreuz 6 mit vier Zapfen 17, denen jeweils eine Lagerungsanordnung zugeordnet ist, welche eine Lagerbüchse 9 umfasst, die in einer Gabelbohrung 10 der jeweiligen Gelenkgabeln 2, 4 aufgenommen ist.

An die zum Gelenk 1 gehörende zweite Gelenkgabel 4 ist ein Rohr 11 fest angeschlossen. Dieses wiederum trägt eine Schiebehülse 12, die eine zentrale Bohrung aufweist und in deren Wandung eine Profilverzahnung 13 eingearbeitet ist, deren Zähne parallel zu einer Drehachse D der Kreuzgelenkwelle verlaufen. In dieser ist ein Schiebezapfen 14, der außen eine Profilverzahnung 15 aufweist, längs verstellbar aufgenommen. Der Schiebezapfen 14 ist mit der zweiten Gelenkgabel 4 des Kreuzgelenkes 1 fest verbunden. Somit können in der Längsverschiebung, welche den Schiebezapfen 14 und die Schiebehülse 12 umfasst, Längenänderungen, die aus der Veränderung der Lage der Kreuzgelenkwelle und damit der Abwinklung an den beiden Kreuzgelenken 1,1' resultieren, aufgenommen werden. Die Längsverschiebung ist durch ein Schutzrohr 16, das an der zweiten Gelenkgabel 4 des Kreuzgelenkes 1 mit einem Ende festgelegt ist und die Außenfläche der Schiebehülse 12 überdeckt und an ihrem anderen Ende eine Dichtung zur Abdichtung gegenüber dieser Außenfläche aufweist, versehen. Die beiden Flansche 3 dienen zum Anschluss an ein treibendes bzw. ein getriebenes Teil eines Antriebstranges, in welchem die Kreuzgelenkwelle eingesetzt ist.

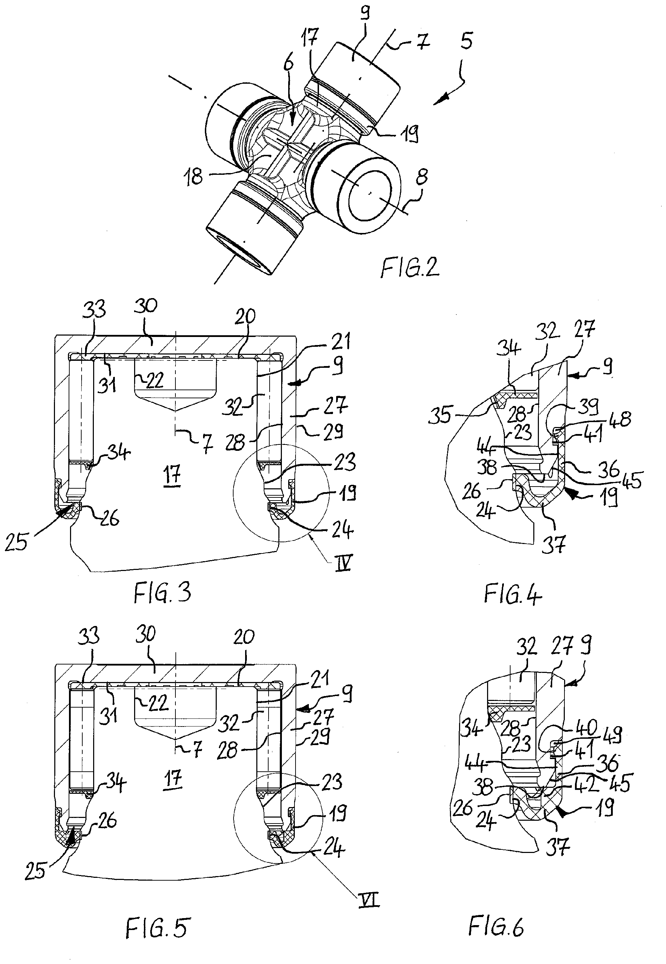

Figur 2 zeigt eine perspektivische Darstellung der Zapfenkreuzgarnitur 5, wie sie in Figur 1 dargestellt ist. Die Zapfenkreuzgarnitur 5 umfasst ein Zapfenkreuz 6 mit einem zentralen Basiskörper 18, von dem vier Zapfen 17, von denen einer exemplarisch in der Figur 2 beschrieben wird, vorstehen. Jeweils zwei der vier Zapfen 17 sind auf einer gemeinsamen Längsachse 7, 8 angeordnet und weisen in entgegengesetzte Richtungen, wobei sich die beiden Längsachsen 7, 8 rechtwinklig schneiden.

Auf die Zapfen 17 ist jeweils eine Dichtungsanordnung mit der Lagerbüchse 9 und einem Schutzring 19 aufgeschoben. Der Schutzring 19 dient zur Abdichtung des Lagerraums bzw. der Zapfenaufnahme innerhalb der Lagerbüchse 9 und/oder dem Schutz einer in der Lagerbüchse 9 angeordneten Hauptdichtung.

Die Figuren 3 bis 11 zeigen die Dichtungsanordnung und den Schutzring 19 in unterschiedlichen Darstellungen und werden im Folgenden zusammen beschrieben.

Figur 3 zeigt ein Detail der Zapfenkreuzgarnitur 5 gemäß Figur 2 im Halbschnitt mit einer Schnittebene, welche durch die Längsachse 7 verläuft. Gezeigt ist ein Teil des Zapfenkreuzes 6 mit dem in Figur 2 beschriebenen Zapfen 17. Der Zapfen 17 besitzt eine Stirnfläche 20 und von dieser ausgehend zunächst eine zylindrische Lauffläche 21 in Richtung zum Basiskörper 18. Von der Stirnfläche 20 geht eine Vorratskammer 22 zur Aufnahme von Schmiermittel aus. Alternativ zur Vorratskammer 22 kann ein Schmiermittelkanal vorgesehen sein, der mit Schmiermittelkanälen aller Zapfen 17 und mit einem im Basiskörper 18 vorgesehenen Schmiernippel zum Abschmieren verbunden ist.

An die zylindrische Lauffläche 21 schließt sich eine Dichtfläche 23 an, die in Richtung zum Basiskörper 18 in eine Sitzfläche 24 übergeht. Die Dichtfläche 23 dient als Dichtfläche für eine hier nicht dargestellte Dichtung, welche in der Lagerbüchse 9 sitzt und aus Gründen der Übersichtlichkeit in den Figuren nicht dargestellt ist. Die Dichtung ist in ein offenes Ende 25 der Lagerbüchse 9 eingeschoben und drehfest zur Lagerbüchse 9 gehalten und weist Dichtlippen auf, die in Anlage zur Dichtfläche 23 gehalten sind, wobei zwischen der Dichtfläche 23 des Zapfens 17 und den Dichtlippen eine Relativbewegung stattfindet, wenn das Gelenk abgebeugt wird und eine Drehbewegung zwischen der Lagerbüchse 9 und dem Zapfen 17 entsteht.

Der Schutzring 19 ist auf die Sitzfläche 24 aufgebracht und drehfest gehalten. Hierzu weist der Schutzring 19 ein Übermaß auf. Das bedeutet, eine zentrale Aufnahmebohrung 26 des Schutzrings 19 weist einen Innendurchmesser auf, der geringer ist als ein Außendurchmesser der Sitzfläche 24. In den Figuren 3 bis 6 ist der Schutzring 19 unverformt dargestellt, um das Übermaß zu verdeutlichen.

Die Lagerbüchse 9 weist einen hohlzylindrischen Mantel 27 auf, der eine zylindrische Innenfläche 28 und eine zylindrische Außenfläche 29 aufweist. Die zylindrische Außenfläche 29 dient zur Aufnahme der Lagerbüchse 9 in der Gabelbohrung in der Gelenkgabel. Ferner besitzt die Lagerbüchse 9 einen Boden 30 mit einer zum offenen Ende 25 der Lagerbüchse 9 weisenden Bodeninnenfläche 31, welche die Stirnfläche 20 des Zapfens 17 überdeckt. Zwischen der Innenfläche 28 der Lagerbüchse 9 und der Lauffläche 21 des Zapfens 17 ist ein Ringspalt gebildet, in dem ein Kranz von Wälzkörpern 32 in Form von Nadeln oder Rollen angeordnet ist. Die Wälzkörper 32 wälzen somit zum einen auf der Lauffläche 21 des Zapfens 17 und zum anderen auf der Innenfläche 28 des Mantels 27 ab und ermöglichen eine Drehbewegung der Lagerbüchse 9 gegenüber dem Zapfen 17 um die Längsachse 7.

Zum Boden 30 der Lagerbüchse 9 hin stützen sich die Wälzkörper 32 axial an einer Druckscheibe 33 ab, die zwischen der Bodeninnenfläche 31 und der Stirnfläche 20 angeordnet ist und radial bezüglich der Längsachse 7 in den Ringspalt, in dem die Wälzkörper 32 angeordnet sind, hinausragt.

Eine Bewegung der Wälzkörper 32 parallel zur Längsachse 7 von der Stirnfläche 20 weg in Richtung auf den Basiskörper 18 zu wird durch eine Anlaufscheibe 34 begrenzt, welche auf den Zapfen 17 aufgeschoben ist und sich gegen eine Schulter im Übergang von der Lauffläche 21 zur Dichtfläche 23 axial in Richtung zum Basiskörper 18 abstützt. Die Anlaufscheibe 34 weist innen axial verlaufende Nuten 35 auf (Figur 4). Diese dienen dazu, Schmiermittel aus dem Bereich des Ringspalts, in dem die Wälzkörper 32 angeordnet sind, in Richtung zum Schutzring 19 herauszuführen. Zwischen der Anlaufscheibe 34 und dem Schutzring 19 befindet sich eine (hier nicht dargestellte) Hauptdichtung, welche, wie bereits oben erläutert, in das offene Ende 25 eingeschoben ist und dort drehsicher gehalten ist.

Der Schutzring 19 weist einen Hülsenabschnitt 36 auf, der im Wesentlichen zylindrisch koaxial zur Längsachse 7 gestaltet ist. Der Hülsenabschnitt 36 umschließt die Außenfläche 29 des Mantels 27 der Lagerbüchse 9 im Bereich des offenen Endes 25. An einem dem Boden 30 der Lagerbüchse 9 abgewandten und dem Basiskörper 18 des Zapfenkreuzes 6 zugewandten hinteren axialen Ende weist der Schutzring 19 einen ringförmigen Sitzabschnitt 37 auf, der in etwa flanschartig gestaltet ist und vom Hülsenabschnitt 36 radial, bezogen auf die Längsachse 7, nach innen vorsteht. Der Sitzabschnitt 37 bildet die Aufnahmebohrung 26, mit der der Schutzring 19 auf der Sitzfläche 24 des Zapfens 17 angeordnet ist. Der Sitzabschnitt 37 überdeckt eine zum Basiskörper 18 gerichtete Stirnfläche 38 des Mantels 27 der Lagerbüchse 9 und den Ringspalt zwischen dem Mantel 27 der Lagerbüchse 9 und dem Zapfen 17. Somit ist eine Hauptdichtung, die zwischen dem Schutzring 19 und der Anlaufscheibe 34 angeordnet ist (hier nicht dargestellt) zum einen vor äußeren Einflüssen geschützt. Zum anderen weist der Schutzring 19 selbst bereits eine Dichtwirkung auf und wirkt als Vordichtung.

Der Hülsenabschnitt 36 weist an einem vom Sitzabschnitt 27 weg gerichteten vorderen axialen Ende radial nach innen weisende Vorsprünge 39, 40 auf. Die Vorsprünge 39, 40 erstrecken sich jeweils über einen Teil des Umfangs um die Längsachse 7 und sind durch Nuten 43, die achsparallel zur Längsachse 7 verlaufen und in eine Innenumfangsnut 44 des Hülsenabschnitts 36 eingebracht sind, voneinander getrennt.

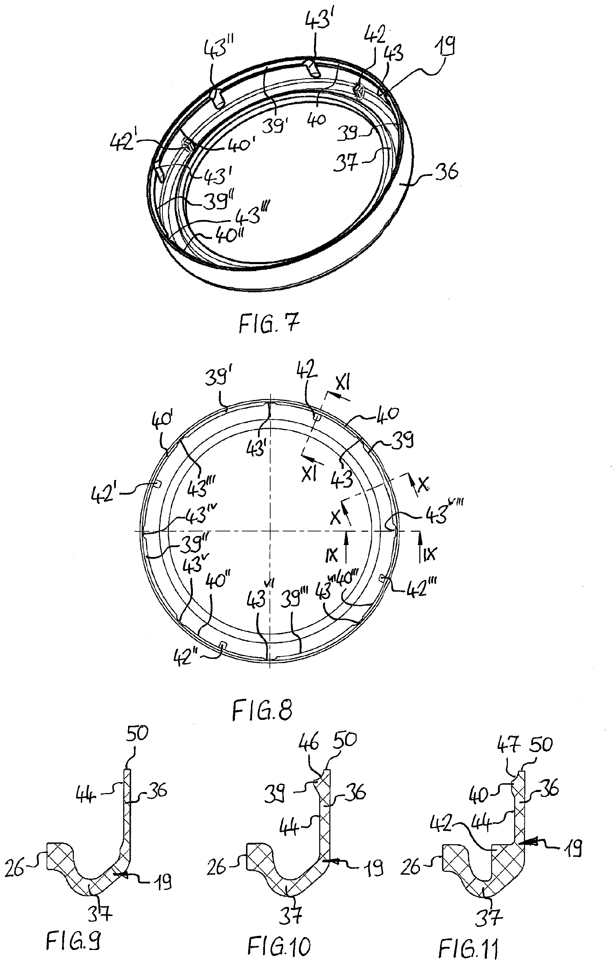

Wie insbesondere in den Figuren 8 und den Querschnittsdarstellungen der Figuren 10 und 11 zu erkennen ist, sind mehrere erste Vorsprünge 39 und zweite Vorsprünge 40 über den Umfang verteilt angeordnet, wobei sich erste Vorsprünge 39 und zweite Vorsprünge 40 alternierend abwechseln. Die ersten Vorsprünge 39 ragen weiter von der Innenumfangsfläche 44 radial nach innen vor als die zweiten Vorsprünge 40. Sämtliche Vorsprünge 39, 40 dienen zur Sicherung des Schutzrings 19 auf der Lagerbüchse 9, indem die Vorsprünge 39, 40 in eine Außenumfangsnut 41 der Lagerbüchse 9 eingreifen. Bei der Montage wird der Schutzring 19 in Richtung der Längsachse 7 auf das offene Ende 25 der Lagerbüchse 9 aufgeschoben, wobei die Vorsprünge 39, 40 gegen eine Anlauffläche 45 am offenen Ende 25 der Lagerbüchse 9 anlaufen. Die Anlauffläche 45 ist kegelstumpfförmig gestaltet, so dass beim weiteren Aufschieben des Schutzrings 19 der Hülsenabschnitt 36 radial nach außen verformt und erweitert wird, bis die Vorsprünge 39, 40 in die Außenumfangsfläche 41 einschnappen. Durch die niedrigeren zweiten Vorsprünge 40 bzw. dadurch, dass diese weniger weit radial nach innen von der Innenumfangsfläche 44 vorstehen, wird die Verformung des Hülsenabschnitts 36 bei der Montage des Schutzrings 19 reduziert, ohne die Haltefunktion zu beeinträchtigen.

Im Bereich des vorderen axialen Endes des Hülsenabschnitts 36 weist dieser eine Stirnfläche 50 auf, die von dem Sitzabschnitt 37 weg gerichtet ist. Im Übergang von der Stirnfläche 50 zu den Vorsprüngen 39, 40 sind jeweils konkave Ausnehmungen 46, 47 gebildet. Diese bilden in der Außenumfangsnut 41 jeweils einen Freiraum 48, 49, durch den verhindert wird, dass beim nachträglichen Lackieren der Zapfenkreuzgarnitur 5 Kapillarkräfte entstehen, die Lack in den Zwischenraum zwischen Außenfläche 29 der Lagerbüchse 9 und der Innenumfangsfläche 44 des Hülsenabschnitts 36 hineinziehen. Grundsätzlich ist ein Radialspalt zwischen der Lagerbüchse 9 und dem Hülsenabschnitt 36 des Schutzrings 19 vorgesehen, um eine Relativbewegung zwischen dem fest mit dem Zapfen 17 verbundenen Schutzring 19 und der sich zum Zapfen 17 drehbeweglich gehaltenen Lagerbüchse 9 zu ermöglichen.

Der Schutzring 19 weist darüber hinaus über den Umfang verteilt angeordnete Stege 42 auf, die von dem Sitzabschnitt 37 axial in Richtung zur Längsachse 7 vorstehen und gleichzeitig mit dem Hülsenabschnitt 36 integral verbunden sind und radial von diesem vorstehen. Die Stege 42 sind somit im Übergangsbereich zwischen dem Hülsenabschnitt 36 und dem Sitzabschnitt 37 angeordnet. Hierbei sind sowohl Hülsenabschnitt 36, Sitzabschnitt 37 als auch Stege 42 integral ausgebildet, also einstückig geformt. Der Schutzring 19 stützt sich über die Stege 42 axial gegen die Stirnfläche 38 der Lagerbüchse 9 ab. Bei der Montage der Lagerbüchse 9 wird zunächst in die Lagerbüchse die Druckscheibe 33, die Wälzkörper 32, die Anlaufscheibe 34, eine hier nicht dargestellte Hauptdichtung sowie der Schutzring 19 montiert. Diese Einheit wird sodann auf den Zapfen 17 axial in Richtung der Längsachse 7 auf den Basiskörper 18 zu auf den Zapfen 17 aufgeschoben. Sobald der Schutzring 19 die Sitzfläche 24 des Zapfens 17 erreicht hat, entsteht eine erhöhte Axialkraft zum Aufschieben des Schutzrings 17 mit der Aufnahmebohrung 26 auf den im Durchmesser größeren Bereich des Zapfens 17 im Bereich der Sitzfläche 24. Hierbei stützt sich der Schutzring 19 axial über die Stege 42 gegen die Lagerbüchse 9 ab.

Da die Stege 42 über den Umfang verteilt angeordnet sind, kann in Umfangsrichtung zwischen den Stegen beim Abschmieren der Lagerung Schmiermittel aus dem Ringspalt zwischen dem Mantel 27 der Lagerbüchse 9 und der Lauffläche 21 des Zapfens 17 zwischen den Stegen 42 und durch das Radialspiel zwischen Hülsenabschnitt 36 und Mantel 27 nach außen austreten.

### Bezugszeichenliste

- 1, 1': Kreuzgelenkwelle
- 2: erste Gelenkgabel
- 3: Flansch
- 4: zweite Gelenkgabel
- 5: Zapfenkreuzgarnitur
- 6: Zapfenkreuz
- 7: Längsachse
- 8: Längsachse
- 9: Lagerbüchse
- 10: Gabelbohrung
- 11: Rohr
- 12: Schiebehülse
- 13: Profilverzahnung
- 14: Schiebezapfen
- 15: Profilverzahnung
- 16: Schutzrohr
- 17: Zapfen
- 18: Basiskörper
- 19: Schutzring
- 20: Stirnfläche
- 21: Lauffläche
- 22: Vorratskammer
- 23: Dichtfläche
- 24: Sitzfläche
- 25: offenes Ende
- 26: Aufnahmebohrung
- 27: Mantel
- 28: Innenfläche
- 29: Außenfläche
- 30: Boden
- 31: Bodeninnenfläche
- 32: Wälzkörper
- 33: Druckscheibe
- 34: Anlaufscheibe
- 35: Nut
- 36: Hülsenabschnitt
- 37: Sitzabschnitt
- 38: Stirnfläche
- 39: erster Vorsprung
- 40: zweiter Vorsprung
- 41: Außenumfangsnut
- 42: Steg
- 43: Nut
- 44: Innenumfangsfläche
- 45: Anlauffläche
- 46: Ausnehmung
- 47: Ausnehmung
- 48: Freiraum
- 49: Freiraum
- 50: Stirnfläche

- D: Drehachse

## Patentansprüche

1. Dichtungsanordnung mit
einer Lagerbüchse (9) für eine Zapfenkreuzgarnitur (5) eines Kreuzgelenks,
wobei die Lagerbüchse (9) eine Zapfenaufnahme zur Aufnahme eines Zapfens (17) eines Zapfenkreuzes (6) aufweist, und
einem Schutzring (19), der auf einem offenen Ende der Lagerbüchse (9) sitzt und der Folgendes aufweist:
einen ringförmigen Hülsenabschnitt (36), der konzentrisch zu einer Längsachse (7) ausgebildet ist,
einen ringförmigen Sitzabschnitt (37), der sich an einem hinteren axialen Ende des Hülsenabschnitts (36) radial nach innen erstreckt, ,
mehrere über den Umfang verteilt angeordnete Stege (42), die von dem Sitzabschnitt (37) axial vorstehen und die innerhalb des Hülsenabschnitts (36) angeordnet sind, wobei die Lagerbüchse (9) gegen die Stege (42) axial abgestützt ist, und
eine umlaufende axial vom Sitzabschnitt (37) wegweisende Stirnfläche (50), die an dem vorderen axialen Endbereich des Hülsenabschnitts (36) angeordnet ist,
**dadurch gekennzeichnet,**
**dass** Schutzring (19) mindestens einen Vorsprung (39, 40) aufweist, der an einem vorderen axialen Endbereich des Hülsenabschnitts (36) radial nach innen vorsteht,
**dass** im Übergang zwischen der Stirnfläche (50) und dem mindestens einen Vorsprung (39, 40) eine konkave Ausnehmung (46, 47) angeordnet ist,
**dass** der mindestens eine Vorsprung (39, 40) in einer Außenumfangsnut (41) der Lagerbüchse (9) sitzt, und
**dass** ein Radialspalt zwischen der Lagerbüchse (9) und dem Hülsenabschnitt (36) des Schutzrings (19) gebildet ist.

2. Dichtungsanordnung nach Anspruch 1,
**dadurch gekennzeichnet,**
**dass** die Stege (42) jeweils in einem Übergangsbereich zwischen dem Hülsenabschnitt (36) und dem Sitzabschnitt (37) angeordnet sind.

3. Dichtungsanordnung nach einem der vorangehenden Ansprüche,
**dadurch gekennzeichnet,**
**dass** mehrere Vorsprünge (39, 40) über den Umfang verteilt angeordnet sind.

4. Dichtungsanordnung nach Anspruch 3,
**dadurch gekennzeichnet,**
**dass** in einer Innenumfangsfläche (44) des Hülsenabschnitts (36) axial verlaufende Nuten (43) angeordnet sind, durch die die Vorsprünge (39, 40) voneinander getrennt sind.

5. Dichtungsanordnung nach einem der Ansprüche 3 oder 4,
**dadurch gekennzeichnet,**
**dass** die Vorsprünge (39, 40) über den Umfang unterschiedlich weit radial nach innen vorstehen.

## Claims

1. Sealing arrangement, having
a bearing bushing (9) for a journal cross assembly (5) of a universal joint,
wherein the bearing bushing (9) has a journal receptacle for receiving a journal (17) of a journal cross (6), and
a protective ring (19), which rests on an open end of the bearing bushing (9), comprising:
an annular sleeve segment (36), formed concentrically to a longitudinal axis (7),
an annular seat segment (37), extending at a rear axial end of the sleeve segment (36) radially inwards,
a plurality of webs (42) arranged distributedly along the circumference projecting axially from the seat segment (37) and arranged within the sleeve segment (36), wherein the bearing bushing (9) is axially supported against the webs (42), and
a circumferential end face (50) facing axially away from the seat segment (37), which end face (50) is arranged on the front axial end portion of the sleeve segment (36),
**characterised in,**
**that** the protective ring (19) has at least one protrusion (39, 40), projecting at a front axial end portion of the sleeve segment (36) radially inwards,
**that** in the transition between the end face (50) and the at least one protrusion (39, 40) a concave recess (46, 47) is arranged,
**that** the at least one protrusion (39, 40) rests in an outer circumferential groove (41) of the bearing bushing (9), and
**that** a radial gap is formed between the bearing bushing (9) and the sleeve segment (36) of the protective ring (19).

2. Sealing arrangement according to claim 1,
**characterised in,**
**that** the webs (42) are respectively arranged in a transitional area between the sleeve segment (36) and the seat segment (37).

3. Sealing arrangement according to one of the preceeding claims,
**characterised in,**
**that** a plurality of protrusions (39, 40) is arranged distributedly along the circumference.

4. Sealing arrangement according to claim 3,
**characterised in,**
**that** in an inner circumferential face (44) of the sleeve segment (36) axially extending grooves (43) are arranged, by means of which the protrusions (39, 40) are separated from each other.

5. Sealing arrangement according to one of claims 3 or 4,
**characterised in,**
**that** the protrusions (39, 40) project differently far radially inwards along the circumference.

## Revendications

1. Système d'étanchéité comportant
un coussinet de palier (9) pour un bloc croisillon (5) d'une articulation à croisillon, le coussinet de palier (9) présentant un récepteur de tourillon destinés à recevoir un tourillon (17) d'un croisillon de cardan (6), et
une bague de protection (19) qui est assise sur une extrémité ouverte du coussinet de palier (9) et qui présente les caractéristiques suivantes :
une section de manchon de forme annulaire (36) qui est réalisée concentriquement par rapport à un axe longitudinal (7),
une section de siège de forme annulaire (37) qui s'étend à une extrémité axiale arrière de la section de manchon (36) radialement vers l'intérieur,
plusieurs traverses (42) disposées réparties sur la circonférence, qui débordent axialement de la section de siège (37) et qui sont disposées dans la section de manchon (36), le coussinet de palier (2) s'appuyant axialement contre les traverses (42), et
une surface avant (50) périphérique détournée axialement de la section de siège (37) et qui est disposée dans la partie terminale axiale avant de la section de manchon (36),
**caractérisé en ce que**
la bague de protection (19) présente au moins une saillie (39,40) qui déborde radialement vers l'intérieur dans une partie terminale axiale avant de la section de manchon (36),
dans la transition entre la surface avant (50) et l'au moins une saillie (39,40), une échancrure concave (46,47) est pratiquée,
que l'au moins un une saillie (39,40) est assise dans une rainure circonférentielle extérieure (41) du coussinet de palier (9), et
qu'un interstice radial entre le coussinet de palier (9) et la section de manchon (36) de la bague de protection (19) est constitué.

2. Système d'étanchéité selon la revendication 1,
**caractérisé en ce que**
les traverses (42) sont disposées respectivement dans une zone de transition entre la section de manchon (36) et la section de siège (37).

3. Système d'étanchéité selon une des revendications précédentes,
**caractérisé en ce que**
plusieurs saillies (39,40) sont disposées réparties sur la circonférence.

4. Système d'étanchéité selon la revendication 3,
**caractérisé en ce que**,
dans une surface circonférentielle intérieure (44) de la section de manchon (36), sont pratiquées des rainures (43) par lesquelles les saillies (39,40) sont séparées les unes des autres.

5. Système d'étanchéité selon une des revendications 3 ou 4,
**caractérisé en ce que**
les saillies (39,40) débordent de la circonférence radialement vers l'intérieur à raison d'une distance variable.
